(19) Europäisches Patentamt / European Patent Office / Office européen des brevets

(11) **EP 4 005 987 A1**

(12) **EUROPEAN PATENT APPLICATION**
published in accordance with Art. 153(4) EPC

(43) Date of publication:
**01.06.2022 Bulletin 2022/22**

(21) Application number: **20842976.1**

(22) Date of filing: **22.07.2020**

(51) International Patent Classification (IPC):
*C03C 3/062* (2006.01)    *C03C 3/087* (2006.01)
*C03C 13/06* (2006.01)    *D01F 9/08* (2006.01)

(52) Cooperative Patent Classification (CPC):
**C03C 3/062; C03C 3/087; C03C 13/06; D01F 9/08**

(86) International application number:
**PCT/JP2020/028459**

(87) International publication number:
**WO 2021/015243 (28.01.2021 Gazette 2021/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.07.2019 JP 2019136956**

(71) Applicant: **Nichias Corporation
Tokyo 104-8555 (JP)**

(72) Inventors:
• **KITAHARA, Hideki
  Tokyo 104-8555 (JP)**

• **MOCHIDA, Takahito
  Tokyo 104-8555 (JP)**
• **YAMAMOTO, Masahiro
  Tokyo 104-8555 (JP)**
• **OOTOSHI, Naohiro
  Tokyo 104-8555 (JP)**
• **MORISAKO, Shiyo
  Tokyo 104-8555 (JP)**
• **YAMADA, Yohei
  Tokyo 104-8555 (JP)**

(74) Representative: **Hamer, Christopher K.
Mathys & Squire
The Shard
32 London Bridge Street
London SE1 9SG (GB)**

(54) **INORGANIC FIBER, INORGANIC FIBER PRODUCT, METHOD FOR PRODUCING INORGANIC FIBER PRODUCT, COMPOSITION FOR PRODUCING INORGANIC FIBER, AND METHOD FOR PRODUCING INORGANIC FIBER**

(57)    To provide an inorganic fiber in which heat resistance is high, an option of a raw material is wide, and productivity is high, and a method of manufacturing an inorganic fiber product. Provided are an inorganic fiber in which a total amount $Q$ of a transition metal compound and $SO_3$ is 0.5% by mass or greater, a molar basicity $P$ expressed by a molar ratio (mol% $(CaO + MgO)$/mol% $(SiO_2 + Al_2O_3)$) of the sum of $CaO$ and $MgO$ to the sum of $SiO_2$ and $Al_2O_3$ is 0.6 or greater, and Expression (1): $-3.3 \times P + 5.1 \leq Q$ (1) is satisfied, and an inorganic fiber product including the inorganic fiber.

# FIG. 1

**Description**

TECHNICAL FIELD

The present invention relates to an inorganic fiber, an inorganic fiber product, a method of manufacturing an inorganic fiber product, a composition for manufacturing an inorganic fiber, and a method of manufacturing an inorganic fiber.

BACKGROUND ART

Inorganic fibers represented by rock wool and glass wool have been used in various industries such as steel, petroleum, chemicals, electricity, automobiles, building materials, and aerospace for various usages such as refractory materials, heat insulating materials, and sealing materials, and are indispensable materials.

In the related art, slag-based rock wool blended with steel slag is fiberized and manufactured as follows. Specifically, natural stones such as silica stone, silica sand, and basalt are added to steel slag as a component adjusting agent, the resultant mixture is melted in a cupola or an electric furnace, and the melt is allowed to flow out from the bottom of the furnace. The melt is fiberized by a spinning method in which the melt is brought into contact with a high-speed rotating body, or a blowing method in which the melt is fiberized by compressed air.

Although the rock wool in the related art has higher heat resistance indicated by a heating shrinkage rate in comparison to typical glass wool, the rock wool is melted at approximately 800°C. Therefore, in the rock wool in the related art, a ratio of iron oxide in a fiber is increased by increasing a blending ratio of basalt containing iron oxide, converter slag, or the like, thereby improving heat resistance (refer to PATENT LITERATURE 1 and PATENT LITERATURE 2).

However, since iron oxide in a rock wool raw material is partially reduced in melting, metallic iron is deposited on the bottom of a melting furnace. Therefore, when the amount of iron increases in the rock wool raw material, the frequency of a work of periodically extracting the metallic iron increases. Due to this, time productivity of the rock wool is lowered, and thus it is necessary to significantly lower the blending ratio of iron oxide in the rock wool raw material from the viewpoint of production.

From the viewpoint, PATENT LITERATURE 3 discloses rock wool having high heat resistance even though the content of iron oxide is small. The rock wool contains 35% by mass to 45% by mass of $SiO_2$, 10% by mass to 15% by mass of $Al_2O_3$, 20% by mass to 35% by mass of CaO, 10% by mass to 25% by mass of MgO, and FeO and $Fe_2O_3$ in a total content of 2% by mass to 10% by mass. A molar ratio of divalent Fe atoms to the sum of divalent Fe atoms and trivalent Fe atoms is set to 0.8 or greater.

CITATION LIST

PATENT LITERATURE

PATENT LITERATURE 1: JP H6-45472 B
PATENT LITERATURE 2: JP H6-65617 B
PATENT LITERATURE 3: WO 2012/176799 A

SUMMARY OF INVENTION

TECHNICAL PROBLEM

In the rock wool described in PATENT LITERATURE 3, it is necessary to adjust the molar ratio of divalent Fe and trivalent Fe within a predetermined range, and thus a selectable raw material is limited. Accordingly, with regard to an inorganic fiber such as rock wool, it is desired to have high heat resistance even though the content of oxide iron is small, and it is desired to further raise productivity while expanding the option of a raw material.

In addition, the present inventors also found that there is a new problem of deterioration of productivity or limitation of a selectable raw material even in the case of adding a compound of transition metals other than Fe from the viewpoint of improving heat resistance of an inorganic fiber such as rock wool.

The invention has made in consideration of the problem, and an object thereof is to provide an inorganic fiber in which heat resistance is high, an option of a raw material is wide, and productivity is high, an inorganic fiber product, a method of manufacturing an inorganic fiber product, a composition for manufacturing an inorganic fiber, and a method of manufacturing an inorganic fiber.

SOLUTION TO PROBLEM

The present inventors have made a thorough investigation. As a result, they found that when a molar basicity expressed by a molar ratio of the sum of CaO and MgO to the sum of $SiO_2$ and $Al_2O_3$, and a total amount of a transition metal compound and $SO_3$ contained in an inorganic fiber are set within predetermined ranges, an inorganic fiber having high heat resistance is obtained, and they accomplished the invention.

Accordingly, according to the inorganic fiber according to the invention, when a total amount Q of a transition metal compound and $SO_3$ is 0.5% by mass or greater, a molar basicity P expressed by a molar ratio (mol% (CaO + MgO)/mol% ($SiO_2$ + $Al_2O_3$)) of the sum of CaO and MgO to the sum of $SiO_2$ and $Al_2O_3$ is 0.6 or greater, and Expression (1): $-3.3 \times P + 5.1 \leq Q$ (1) is satisfied, the above-described problem is solved.

At this time, the transition metal compound may be at least one kind of compound selected from the group consisting of Fe, Mn, Cu, Ni, Co, Zr, V, Nb, Mo, W, and Y.

At this time, a heating shrinkage rate at 1110°C may be 14% or less.

At this time, the inorganic fiber may have a composition containing:

25% by weight to 45% by weight of $SiO_2$;
5% by weight to 25% by weight of $Al_2O_3$;
15% by weight to 50% by weight of CaO;
3% by weight to 20% by weight of MgO;
0.1% by weight to 14% by weight of transition metal compound; and
0.1% by weight to 10% by weight of $SO_3$.

At this time, the inorganic fiber may further contain:

0% by weight to 10% by weight of $Na_2O$; and
0% by weight to 10% by weight of $K_2O$.

At this time, the inorganic fiber may contain at least one or more kinds selected from the group consisting of $P_2O_5$, $Li_2O$, $Na_2O$, and $K_2O$, and a total amount of $P_2O_5$, $Li_2O$, $Na_2O$, and $K_2O$ is 3% by weight to 10% by weight.

At this time, the inorganic fiber may be at least one or more kinds selected from the group consisting of rock wool, stone wool, slag wool, mineral wool, glass wool, and mineral glass wool.

According to an inorganic fiber product according to the invention, the above-described inorganic fiber is included, and thus the above-described problem is solved.

At this time, the inorganic fiber product may be a heat insulating material or a refractory material.

According to a method of manufacturing an inorganic fiber product according to the invention, the method includes molding the inorganic fiber, and thus the above-described problem is solved.

According to a composition for manufacturing an inorganic fiber according to the invention, a total amount Q of a transition metal compound and $SO_3$ is 0.5% by mass or greater, a molar basicity P expressed by a molar ratio (mol% (CaO + MgO)/mol% ($SiO_2$ + $Al_2O_3$)) of the sum of CaO and MgO to the sum of $SiO_2$ and $Al_2O_3$ is 0.6 or greater, and Expression (1): $-3.3 \times P + 5.1 \leq Q$ (1) is satisfied, and thus the above-described problem is solved.

According to a method of manufacturing an inorganic fiber according to the invention, the method includes melting the composition for manufacturing an inorganic fiber, and making the resultant melt into a fiber to obtain an inorganic fiber, and thus the above-described problem is solved.

ADVANTAGEOUS EFFECTS OF INVENTION

According to the invention, it is possible to provide an inorganic fiber in which heat resistance is high, an option of a raw material is wide, and productivity is high, an inorganic fiber product, a method of manufacturing an inorganic fiber, a composition for manufacturing an inorganic fiber, and a method of manufacturing an inorganic fiber.

BRIEF DESCRIPTION OF DRAWINGS

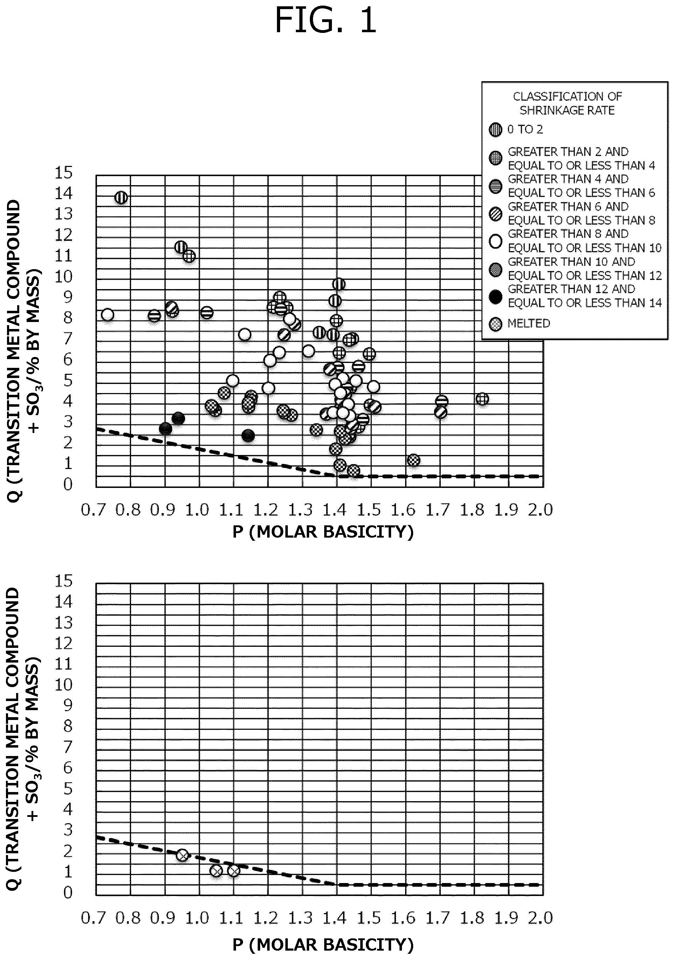

FIG. 1 is a graph obtained by extracting samples in which a heating shrinkage rate at 1110°C is 14% or less (upper drawing) and samples melted at 1110°C (lower drawing) among respective samples in Test 1, and by plotting a molar basicity P in the horizontal axis and a total content Q of a transition metal compound and sulfur in the vertical axis.

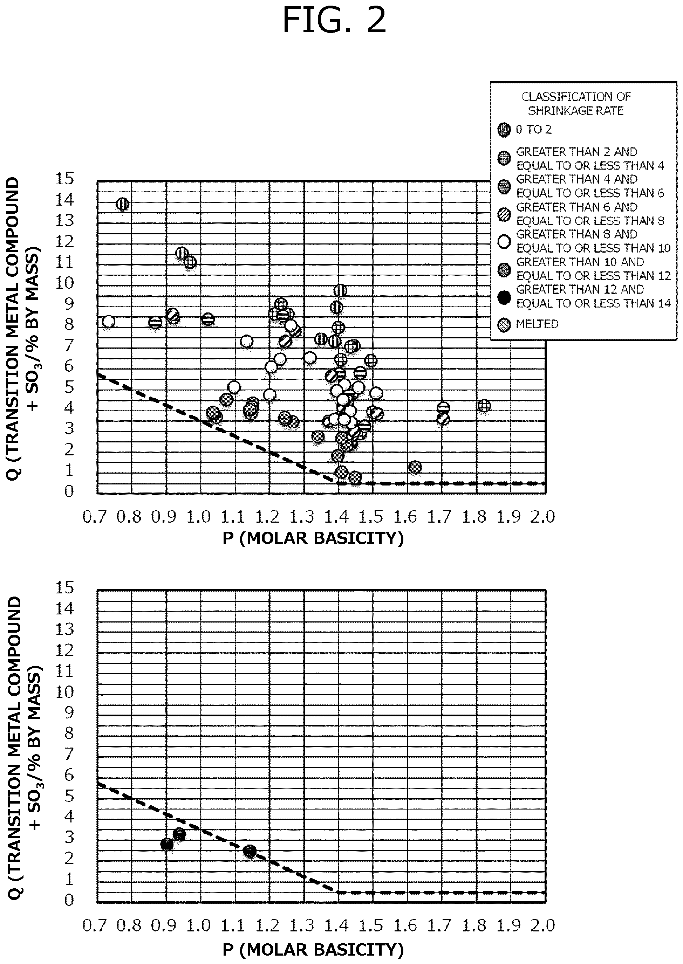

FIG. 2 is a graph obtained by extracting samples in which the heating shrinkage rate at 1110°C is 12% or less (upper drawing) and samples in which the shrinkage rate is more than 12% (lower drawing) among the respective samples in Test 1, and by plotting the molar basicity P in the horizontal axis and the total content Q of the transition metal compound and sulfur in the vertical axis.

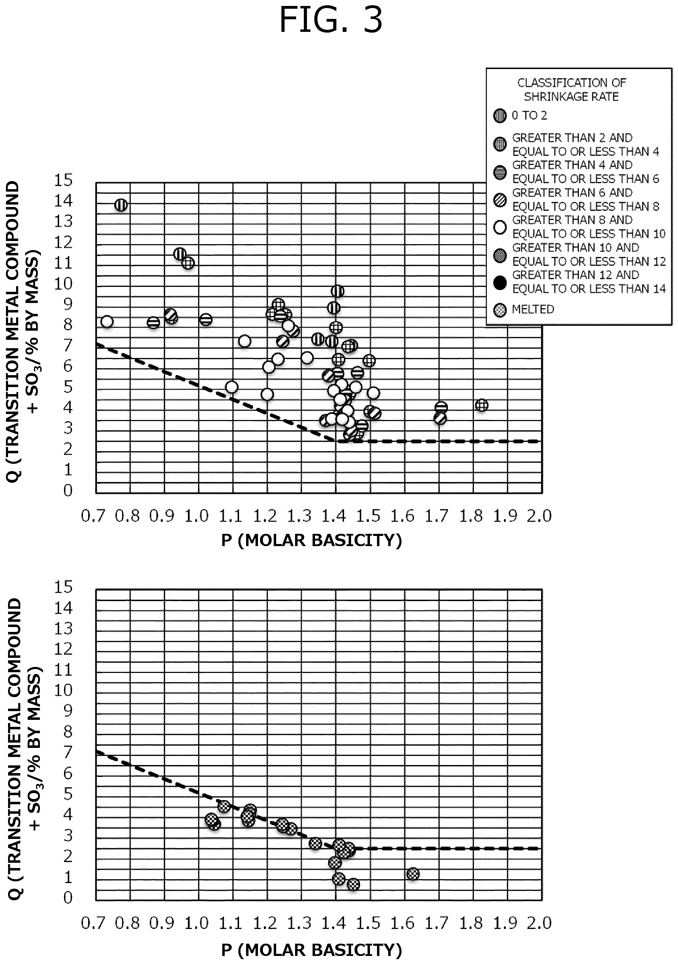

FIG. 3 is a graph obtained by extracting samples in which the heating shrinkage rate at 1110°C is 10% or less (upper drawing) and samples in which the shrinkage rate is more than 10% (lower drawing) among the respective samples in Test 1, and by plotting the molar basicity P in the horizontal axis and the total content Q of the transition metal compound and sulfur in the vertical axis.

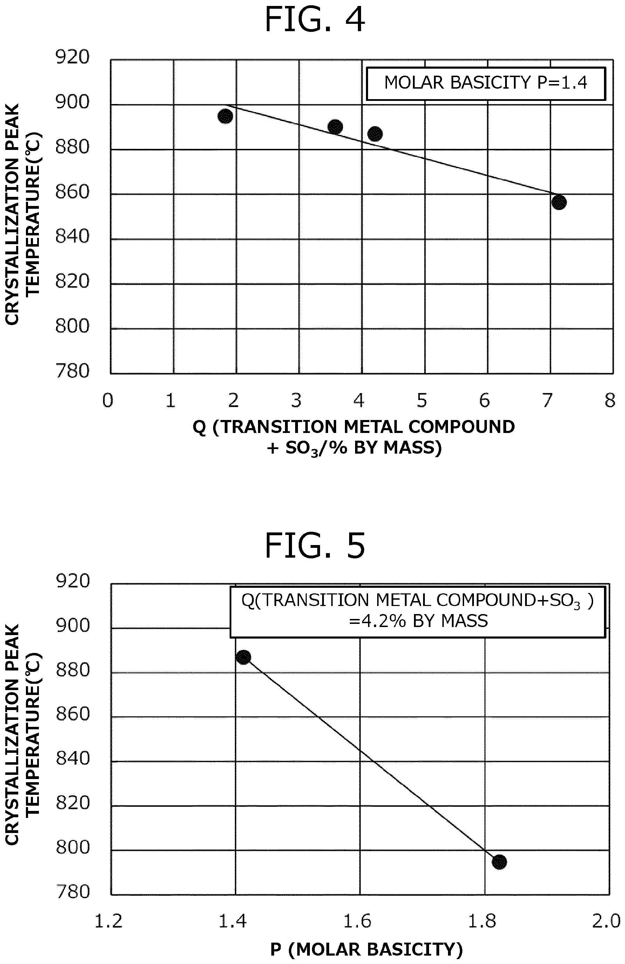

FIG. 4 is a graph obtained by extracting samples in which the molar basicity P is 1.4 among the respective samples in Test 1, and by plotting the total content Q of the transition metal compound and sulfur in the horizontal axis and a crystallization peak temperature in the vertical axis.
FIG. 5 is a graph obtained by extracting samples in which the total content Q of the transition metal compound and sulfur is 4.2% by mass among the respective samples in Test 1, and by plotting the molar basicity P in the horizontal axis and the crystallization peak temperature in the vertical axis.

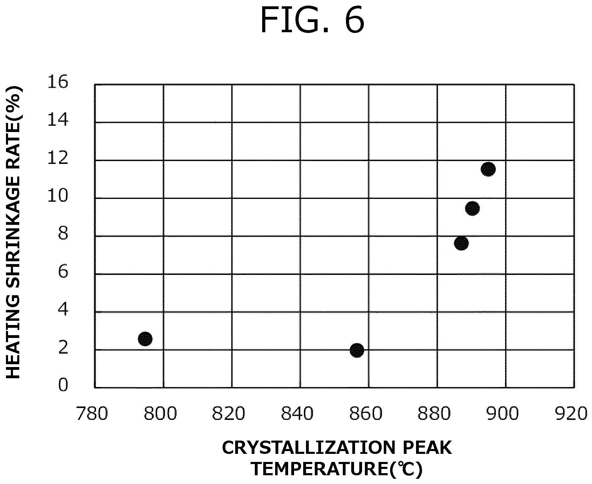

FIG. 6 is a graph obtained by plotting the crystallization peak temperature of the respective samples in Test 1 in the horizontal axis and the heating shrinkage rate at 1110°C in the vertical axis.

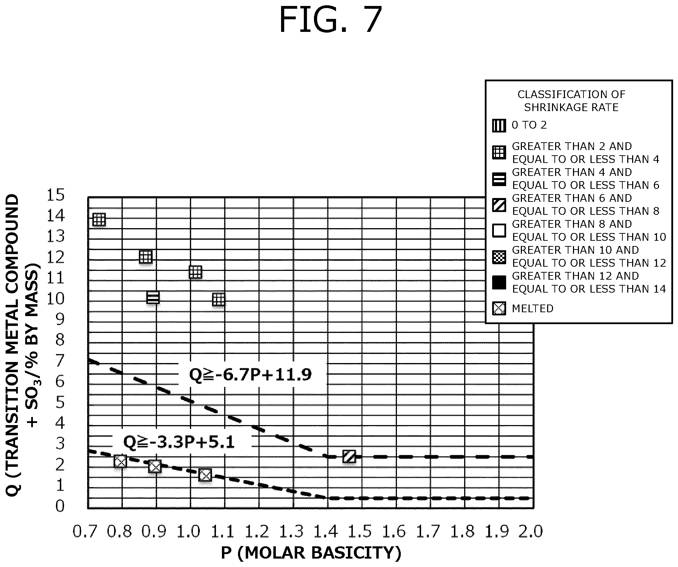

FIG. 7 is a graph obtained by plotting the molar basicity P in the horizontal axis and the total content Q of the transition metal compound and sulfur in the vertical axis with respect to respective inorganic fiber sample in Test 2.

DESCRIPTION OF EMBODIMENTS

Hereinafter, an embodiment (hereinafter, referred to as this embodiment) of the invention will be described with reference to FIG. 1 to FIG. 7. This embodiment relates to an inorganic fiber, an inorganic fiber product, a method of manufacturing an inorganic fiber product, a composition for manufacturing an inorganic fiber, and a method of manufacturing an inorganic fiber.

<Definition>

In this specification, ○% by weight to △% by weight represents to equal to or greater than ○% by weight and equal to or less than △% by weight.
In this specification, the content of each component is noted in terms of an oxide, and can be measured by fluorescent X-ray analysis (XRF). Here, even though the content of each component is noted in terms of an oxide, it is not necessary for the component to be contained as an oxide. For example, each component (S or Fe) may not be contained as an oxide ($SO_3$ or $Fe_2O_3$), and respective components may be contained in a type of a compound such as a sulfide (FeS).

<Inorganic Fiber and Composition for Manufacturing Inorganic Fiber>

An inorganic fiber (ore fiber) of this embodiment is a fiber-shaped material that is mainly manufactured from various natural ores such as silica and andesite, raw materials such as clay, slag, and glass, or materials obtained by crushing the raw materials. Examples of the inorganic fiber include at least one or more kinds selected from the group consisting of rock wool, stone wool, slag wool, mineral wool, glass wool, and mineral glass wool. As the inorganic fiber of this embodiment, the rock wool or the slag wool is preferable from the viewpoint of heat resistance.
Here, the composition for manufacturing an inorganic fiber is a composition that becomes a raw material when manufacturing the inorganic fiber, and a state thereof is not particularly limited, and examples thereof include a state in which respective components exist as a mixed solidified material, a state in which respective components are melted, a state in which respective components exist as a powder, and the like.
The inorganic fiber and the composition for manufacturing an inorganic fiber of this embodiment contain a transition metal compound such as $SiO_2$, $Al_2O_3$, CaO, MgO, and $Fe_2O_3$, and $SO_3$ as an essential component, a total amount Q of a transition metal compound and $SO_3$ is 0.5% by mass or greater, a molar basicity P expressed by a molar ratio (mol% (CaO + MgO)/mol% ($SiO_2$ + $Al_2O_3$)) of the sum of CaO and MgO to the sum of $SiO_2$ and $Al_2O_3$ is 0.6 or greater, and Expression (1): $-3.3 \times P + 5.1 \leq Q$ (1) or Expression (1'): $-3.3 \times P + 5.1 < Q$ (1') is satisfied.
In addition, in the inorganic fiber and the composition for manufacturing an inorganic fiber, it is preferable that the total amount Q of the transition metal compound and $SO_3$ is 0.5% by mass or greater, the molar basicity P is 0.6 or greater, and Expression (2): $-7.5 \times P + 11.0 \leq Q$ (2) or Expression (2'): $-7.5 \times P + 11.0 < Q$ (2') is satisfied.
In addition, in the inorganic fiber and the composition for manufacturing an inorganic fiber, it is more preferable that the total amount Q of the transition metal compound and $SO_3$ is 2.5% by mass or greater, the molar basicity P is 0.6 or greater, and Expression (3): $-6.7 \times P + 11.9 \leq Q$ (3) or Expression (2'): $-6.7 \times P + 11.9 < Q$ (3') is satisfied.

(Content (Q) of Transition Metal Compound and sulfur)

The total content Q of the transition metal compound and sulfur ($SO_3$) plays an important role in heat resistance of the inorganic fiber. In the inorganic fiber and the composition for manufacturing an inorganic fiber of this embodiment, a lower limit value of the total content Q (% by mass) of the transition metal compound and sulfur is 0.5% by mass or greater from the viewpoint of the heat resistance, preferably 1.0% by mass or greater, and more preferably 2.5% by mass or greater when the sum of components contained in the inorganic fiber is set as 100% by mass.

Here, since the transition metal compound in a raw material partially reduced in melting and is deposited as a metal on the bottom of a melting furnace, it is preferable to suppress the amount of the transition metal compound to be low. In addition, when rock wool is fiberized, if a large amount of sulfur exists, iron used in a device is corroded, and thus it is preferable to suppress the amount of sulfur to be low.

Specifically, an upper limit value of a total amount Q (% by mass) of the transition metal compound and sulfur is 15% by mass or less from the viewpoint of productivity, preferably 12% by mass or less, and more preferably 10% by mass or less.

(Molar Basicity (P))

A molar basicity P is expressed by a molar ratio (mol% (CaO + MgO)/mol% ($SiO_2$ + $Al_2O_3$)) of the sum of CaO and MgO to the sum of $SiO_2$ and $Al_2O_3$. Specifically, when a total molar ratio of components contained in rock wool is set as 100 mol%, the molar basicity P is obtained by dividing the sum (mol%) of CaO and MgO by the sum (mol%) of $SiO_2$ and $Al_2O_3$. Note that, in a case where other trace components (corresponding to unavoidable impurities) are contained, in calculation of the molar ratio, calculation is performed by excluding the other trace components.

The molar basicity P is a ratio of $SiO_2$ and $Al_2O_3$ which form a glass skeleton of the inorganic fiber, and a ratio of CaO and MgO which divide the skeleton of the inorganic fiber, and is an index of safety of the skeleton of the inorganic fiber. In rock wool of this embodiment, the molar basicity P is 0.4 to 2.0, preferably 0.5 to 1.7, and more preferably 0.6 to 1.6.

When the molar basicity P is low, viscosity of a composition for manufacturing an inorganic fiber becomes excessively high, and thus the composition is not appropriately melted. As a result, productivity deteriorates. Note that, when the molar basicity P is high, the glass skeleton becomes unstable, and atoms migrate when being heated, and crystallization is likely to occur. Accordingly, even when the transition metal compound is added in a small amount, heat resistance becomes satisfactory. Note that, when the molar basicity P is excessively high, there is a possibility that crystallization is likely to occur and embrittlement may occur, and thus the molar basicity P is preferably set within the above-described numerical range.

In the inorganic fiber and the composition for manufacturing an inorganic fiber according to this embodiment, the transition metal compound is at least one kind of compound selected from the group consisting of Fe, Mn, Cu, Ni, Co, Zr, V, Nb, Mo, W, and Y. Compounds of Fe, Mn, Cu, Ni, Co, Zr, V, Nb, Mo, W, and Y react with sulfur and form sulfides (FeS, MnS, CuS, NiS, CoS, and the like) in a process of manufacturing an inorganic fiber.

For example, the inorganic fiber and the composition for manufacturing an inorganic fiber has the following composition, but there is no limitation to the composition.

$SiO_2$: 25% by weight to 45% by weight, and preferably 25% by weight to 40% by weight
$Al_2O_3$: 5% by weight to 25% by weight, and preferably 7% by weight to 20% by weight
CaO: 15% by weight to 50% by weight, and preferably 20% by weight to 46% by weight
MgO: 3% by weight to 20% by weight, and preferably 5% by weight to 15% by weight
Transition metal compound ($Fe_2O_3$, MnO, or the like): 0.1% by weight to 14% by weight, and preferably 1% by weight to 12% by weight
$Na_2O$: 0% by weight to 10% by weight, preferably 0% by weight to 5% by weight, more preferably 0% by weight to 3% by weight, and still more preferably 0% by weight to 2% by weight
$K_2O$: 0% by weight to 10% by weight, preferably 0% by weight to 5% by weight, more preferably 0% by weight to 3% by weight, and still more preferably 0% by weight to 2% by weight
$SO_3$: 0.1% by weight to 10% by weight, and preferably 0.5% by weight to 6.1% by weight

At this time, viscosity adjustment with an alkali metal or phosphor may be performed. Specifically, when at least one or more kinds selected from the group consisting of $P_2O_5$, $Li_2O$, $Na_2O$, and $K_2O$ are contained, and the content of $P_2O_5$ + $Li_2O$ + $Na_2O$ + $K_2O$ is set to be larger, that is, 3% by weight to 10% by weight in terms of an oxide from the viewpoint of productivity, melt viscosity can be adjusted.

(Crystallization Peak Temperature)

In the inorganic fiber and the composition for manufacturing an inorganic fiber according to this embodiment, a crystallization peak temperature is 920°C or lower, preferably 900°C or lower, and more preferably 895°C or lower. Here, the crystallization peak temperature is a temperature when components which constitute an inorganic fiber are crystallized, and can be obtained from a value of an exothermic peak at the time of temperature rising, for example, by a differential thermal analyzer (DTA) or differential scanning calorimetry (DSC). In this embodiment, for example, the crystallization peak temperature can be defined as an exothermic peak temperature when being heated up to 1000°C at a temperature rising rate of 20°C/minute by using the differential thermal analyzer (DTA).

In the inorganic fiber and the composition for manufacturing an inorganic fiber according to this embodiment, a softening and deforming temperature (softening point) is set to be higher than the crystallization peak temperature. That is, since microcrystals exist before the inorganic fiber is softened and deformed due to heating, softening does not proceed, and curvature and fusion of fibers do not occur even when being exposed to a high temperature.

Here, the softening point is a temperature at which the inorganic fiber and the composition for manufacturing an inorganic fiber start to be significantly softened and deformed, and can be measured and obtained, for example, by a method defined in JIS R 3103-1: 2001.

(Heating Shrinkage Rate)

When being measured by a method described in examples, a heating shrinkage rate of the composition for manufacturing an inorganic fiber according to this embodiment is 14% or less after heating at 1110°C, preferably 12% or less, more preferably 11% or less, and still more preferably 10% or less.

(Mechanism of Heat Resistance Exhibition)

A surface tension acts on a fiber surface of an inorganic fiber to reduce the surface as much as possible. When the fiber is softened and enters a deformation possible state, the fiber is thickened or deformed due to an influence of the surface tension. In addition, when softening of the fiber proceeds, fiber intersections are fused, and the fiber is finally melted. Heat resistance of an inorganic fiber and an inorganic fiber heat-insulating material becomes more excellent as a temperature at which a fiber shape is not changed and a shape as a heat insulating material having voids between fibers can be maintained is higher.

The inorganic fiber is amorphous in a non-heated state. Here, amorphous is a state in which atoms do not have a regular arrangement like a crystal, and crystalline is a stable structure in which atoms constituting a substance have spatial regularity, adjacent atoms are three-dimensionally periodically arranged.

Amorphous glass is softened and deformed when being heated from room temperature. However, a state of glass having a special composition, which is called crystallized glass, begins to vary from amorphous to crystalline before reaching a softening and deforming temperature, and thus the glass varies into an agglomerate of microcrystals without being softened and deformed.

Accordingly, with regard to curvature and fusion of an inorganic fiber, the present inventors have focused on importance of whether or not a crystalline state exists before being softened and deformed. Specifically, in the inorganic fiber of this embodiment, since values of the molar basicity P and the total content Q of the transition metal compound and sulfur ($SO_3$) are within predetermined ranges, and microcrystals exist before being softened and deformed due to heating, softening does not proceed and curvature and fusion of the fiber do not occur even when being exposed to a high temperature of 1100°C or higher.

<Method of Manufacturing Inorganic Fiber>

In a method of manufacturing an inorganic fiber according to this embodiment, a known method that has been used in manufacturing of an inorganic fiber in the related art can be used except that the composition (inorganic fiber raw material) for manufacturing an inorganic fiber which has the same composition as the above-described composition of the inorganic fiber.

The method of manufacturing an inorganic fiber according to this embodiment is characterized in that the composition for manufacturing an inorganic fiber is melted (melting process) and the resultant melt is fiberized (fiberization process) to obtain an inorganic fiber. More specifically, in the method of manufacturing an inorganic fiber according to the invention, the composition for manufacturing an inorganic fiber is melted in a cupola, an electric furnace, or the like, and the resultant melt is fiberized by spinning, blowing, or the like to obtain an inorganic fiber.

In the case of performing manufacturing of the inorganic fiber by using the electric furnace, a range of a raw material is wider in comparison to the cupola, and thus the electric furnace is suitable. In the case of using the electric furnace, blowing is not performed, and thus a sulfur component is likely to be contained in the inorganic fiber. In addition, the cupola blows air into a powder by using coke as a heat source and a reducing agent. From the viewpoint of environment protection, the cupola is provided with a desulfurization device. In the method of manufacturing an inorganic fiber according to this embodiment, since the transition metal compound and sulfur are caused to react with each other and are converted into a sulfide, a sulfur component is suppressed from being emitted into an environment.

<Method of Manufacturing Inorganic Fiber Product>

The inorganic fiber according to this embodiment is collected in a cotton collection chamber, and is defiberized and granulated into granular cotton in correspondence with a use. Alternatively, a binder is added to the inorganic fiber and is hardened in a curing furnace, the resultant inorganic fiber is adjusted to have predetermined density and thickness, and is processed into an inorganic fiber product (molded product, secondary product) having a board shape, a mat shape, a felt shape, a blanket shape, a strip shape, a tubular shape, or the like.

<Inorganic Fiber Product>

Various kinds of inorganic fiber products (secondary products) can be obtained from the inorganic fiber according to this embodiment. For example, shaped products such as bulks, blankets, blocks, ropes, yarns, woven products, inorganic fibers coated with a surfactant, shotless bulks from which shots (non-fiberized objects) are reduced or removed, boards manufactured by using a solvent such as water, molds, paper, felts, and wet felts impregnated with colloidal silica are obtained. In addition, shaped products after processing the shaped products with collide or the like are obtained. In addition, amorphous materials (mastics, casters, coating materials, and the like) manufactured by using a solvent such as water are also obtained. In addition, structures in which the shaped products, the amorphous products, and various heat-generating bodies are combined are also obtained.

Examples of specific uses of the inorganic fiber according to this embodiment include refractory coating materials for protecting steel frames or the like, heat insulating materials for various buildings, cover materials for various pipes, joint materials in heat treatment devices and furnaces such as an industrial furnace and an incinerator, joint materials for filling a gap in refractory tiles, heat insulating bricks, iron skins, refractory mortar, and the like, sealing materials, packing materials, cushioning materials, heat insulating materials, refractory materials, fireproof materials, heat reserving materials, protective materials, covering materials, filtering materials, filter materials, insulating materials, filling materials, repair materials, heat-resistant materials, non-combustible materials, soundproof materials, sound-absorbing materials, frictional materials (for example, additives for brake pads), rolls for transporting glass plates and steel plates, automobile catalyst carrier holding materials, various fiber reinforced composite materials (for example, reinforcing fibers for fiber reinforced cement, fiber reinforced plastic, and the like, reinforcing fibers for heat-resistant materials and refractory materials, reinforcing fibers for adhesives and coating materials), and the like.

[Example]

Hereinafter, the invention will be described in detail on the basis of specific examples, but the invention is not limited thereto.

<Preparation of Sample>

Reagents were mixed (total: 60 to 65 g) in compositions shown in Table 1 to Table 4. At this time, carbon (2 to 3 g) was added. The mixed reagents were put into a crucible, and were heated and melted in an electric furnace at 1500°C. A temperature was raised up to 1500°C and the temperature was retained for 15 to 30 minutes, and then the resultant melt was poured into water to be rapidly cooled and vitrified. Glass obtained through rapid cooling was pulverized with a mortar and a ball mill, and uniaxial press molding was performed by applying a load of 300 to 400 kg to prepare a pellet, that is, a composition (size: $\phi 7$ mm $\times$ 17 mm) for manufacturing an inorganic fiber.

<Test 1: Evaluation of Heat Resistance and Crystallization Peak Temperature>

(Heat Resistance)

As evaluation for heat resistance, a heating shrinkage rate of a sample was measured. Specifically, a sample was placed in an electric furnace, and was heated up to 1110°C in accordance with a temperature rising rate simulating a heating curve of ISO834. A diameter of each sample was measured before and after heating, and the shrinkage rate was measured by the dimensional change. Specifically, calculation was performed with an expression of a heating shrinkage rate (%) = (sample diameter before heating - sample diameter after heating)/sample diameter before heating $\times$ 100.

In the following discussion, in the case of performing heating under the above-described heating conditions, when the shrinkage rate can be appropriately measured without melting of a sample pellet, this is determined as existence of heat resistance.

(Crystallization Peak Temperature)

A crystallization peak temperature of a sample was obtained with an exothermic peak temperature when being heated up to 1000°C at a temperature rising rate of 20°C/minute by using differential thermal analyzer (DTA).

(Result of Test 1)

Results of Test 1 are shown in Table 1 to Table 4, and FIG. 1 to FIG. 6. Note that, in the following tables, in a column of a composition (% by mass), trace components (corresponding to unavoidable impurities) are collectively noted as "others", and in the column of a composition (mol%), calculation was performed by excluding "other" components.

[Table 1]

| | Composition (% by mass) | | | | | | | | | | Composition (mol%) | | | | | | | | | | Molar basicity | Physical properties | |
|---|---|---|---|---|---|---|---|---|---|---|---|---|---|---|---|---|---|---|---|---|---|---|---|
| | $SiO_2$ | $Al_2O_3$ | CaO | MgO | $Fe_2O_3$ | $Na_2O$ | $K_2O$ | $TiO_2$ | $SO_3$ | Others | $Fe_2O_3$ $+SO_3$ | $SiO_2$ | $Al_2O_3$ | CaO | MgO | $Fe_2O_3$ | $Na_2O$ | $K_2O$ | $TiO_2$ | $SO_3$ | | Shrink-age rate (%) | Crystalli-zation temper-ature (°C) |
| Example 1 | 30.7 | 14.6 | 40.9 | 8.3 | 3.0 | 0.3 | 0.4 | 0.7 | 1.0 | 0.1 | 4.0 | 31.2 | 8.7 | 44.5 | 12.6 | 1.2 | 0.3 | 0.3 | 0.5 | 0.7 | 1.4 | 4.2 | – |
| Example 2 | 28.5 | 15.0 | 45.8 | 7.7 | 0.7 | 0.0 | 0.4 | 0.9 | 0.6 | 0.4 | 1.3 | 28.5 | 8.9 | 49.2 | 11.5 | 0.3 | 0.0 | 0.3 | 0.7 | 0.4 | 1.6 | 10.6 | – |
| Example 3 | 33.8 | 12.3 | 43.4 | 7.5 | 0.2 | 0.0 | 0.3 | 1.3 | 0.8 | 0.4 | 1.0 | 33.5 | 7.2 | 46.1 | 11.0 | 0.1 | 0.0 | 0.2 | 0.9 | 0.6 | 1.4 | 11.2 | – |
| Example 4 | 32.6 | 13.5 | 42.4 | 7.4 | 0.9 | 0.3 | 0.6 | 1.0 | 0.9 | 0.4 | 1.8 | 32.6 | 7.9 | 45.6 | 11.1 | 0.4 | 0.3 | 0.4 | 0.8 | 0.7 | 1.4 | 11.5 | 895 |
| Example 5 | 33.4 | 11.8 | 42.2 | 7.8 | 1.5 | 0.0 | 0.6 | 1.1 | 1.2 | 0.4 | 2.7 | 33.4 | 6.9 | 45.2 | 11.6 | 0.6 | 0.0 | 0.4 | 0.8 | 0.9 | 1.4 | 11.6 | – |
| Example 6 | 32.4 | 12.9 | 42.6 | 7.6 | 0.9 | 0.3 | 0.6 | 1.0 | 1.4 | 0.4 | 2.3 | 32.4 | 7.6 | 45.6 | 11.3 | 0.3 | 0.3 | 0.4 | 0.8 | 1.1 | 1.4 | 11.3 | – |
| Example 7 | 31.4 | 14.1 | 42.5 | 7.7 | 1.1 | 0.3 | 0.6 | 0.7 | 1.4 | 0.4 | 2.4 | 31.5 | 8.3 | 45.7 | 11.6 | 0.4 | 0.2 | 0.4 | 0.5 | 1.0 | 1.4 | 10.8 | – |
| Example 8 | 25.7 | 16.0 | 44.5 | 8.1 | 2.6 | 0.3 | 0.5 | 1.0 | 1.0 | 0.3 | 3.6 | 26.2 | 9.6 | 48.5 | 12.3 | 1.0 | 0.3 | 0.3 | 0.8 | 0.8 | 1.7 | 7.4 | – |
| Example 9 | 41.4 | 12.9 | 33.8 | 6.5 | 2.2 | 0.2 | 0.6 | 0.9 | 1.1 | 0.3 | 3.3 | 42.2 | 7.8 | 36.9 | 9.9 | 0.9 | 0.2 | 0.4 | 0.7 | 0.8 | 0.9 | 14.0 | – |
| Example 10 | 26.0 | 13.3 | 45.7 | 8.5 | 2.0 | 0.3 | 0.5 | 1.0 | 2.3 | 0.4 | 4.2 | 26.1 | 7.8 | 49.2 | 12.8 | 0.7 | 0.3 | 0.3 | 0.8 | 1.7 | 1.7 | 2.6 | 795 |
| Example 11 | 26.2 | 15.1 | 44.2 | 8.4 | 3.0 | 0.3 | 0.5 | 0.8 | 1.1 | 0.3 | 4.1 | 26.6 | 9.1 | 48.1 | 12.7 | 1.1 | 0.3 | 0.3 | 0.6 | 0.9 | 1.7 | 5.0 | – |
| Example 12 | 32.1 | 12.5 | 40.8 | 8.1 | 1.8 | 0.2 | 0.5 | 0.9 | 2.7 | 0.4 | 4.5 | 32.3 | 7.4 | 43.9 | 12.1 | 0.7 | 0.2 | 0.3 | 0.7 | 2.1 | 1.4 | 9.4 | – |
| Example 13 | 30.9 | 12.0 | 41.6 | 7.3 | 1.1 | 0.2 | 0.6 | 1.1 | 4.7 | 0.4 | 5.8 | 31.2 | 7.1 | 45.0 | 11.0 | 0.4 | 0.2 | 0.4 | 0.8 | 3.5 | 1.5 | 5.0 | – |
| Example 14 | 33.3 | 12.5 | 40.6 | 8.2 | 0.5 | 0.3 | 0.4 | 0.9 | 3.0 | 0.4 | 3.5 | 33.2 | 7.4 | 43.4 | 12.1 | 0.2 | 0.3 | 0.3 | 0.7 | 2.2 | 1.4 | 7.4 | – |
| Example 15 | 32.4 | 11.4 | 41.3 | 7.8 | 0.7 | 0.2 | 0.5 | 1.1 | 4.2 | 0.3 | 4.9 | 32.4 | 6.7 | 44.3 | 11.6 | 0.3 | 0.2 | 0.3 | 0.8 | 3.1 | 1.4 | 5.8 | – |
| Example 16 | 31.6 | 12.0 | 40.3 | 7.7 | 2.7 | 0.3 | 0.5 | 0.9 | 2.6 | 1.4 | 5.2 | 32.3 | 7.2 | 44.2 | 11.8 | 1.0 | 0.3 | 0.3 | 0.7 | 2.0 | 1.4 | 9.2 | – |
| Example 17 | 31.9 | 12.5 | 41.7 | 7.8 | 0.7 | 0.2 | 0.5 | 0.9 | 3.3 | 0.4 | 4.0 | 32.0 | 7.4 | 44.7 | 11.6 | 0.3 | 0.2 | 0.3 | 0.7 | 2.5 | 1.4 | 8.3 | – |
| Example 18 | 31.1 | 12.1 | 43.3 | 7.6 | 0.8 | 0.3 | 0.5 | 0.9 | 3.1 | 0.4 | 3.9 | 31.1 | 7.1 | 46.3 | 11.4 | 0.3 | 0.3 | 0.3 | 0.7 | 2.3 | 1.5 | 7.3 | – |
| Example 19 | 31.3 | 13.7 | 40.2 | 7.9 | 4.0 | 0.3 | 0.5 | 0.7 | 0.9 | 0.3 | 4.9 | 32.0 | 8.3 | 44.0 | 12.1 | 1.6 | 0.3 | 0.3 | 0.6 | 0.7 | 1.4 | 9.3 | – |
| Example 20 | 32.0 | 12.8 | 41.4 | 7.8 | 2.9 | 0.0 | 0.5 | 0.9 | 1.3 | 0.4 | 4.2 | 32.4 | 7.6 | 44.8 | 11.7 | 1.1 | 0.0 | 0.3 | 0.7 | 1.0 | 1.4 | 7.6 | 887 |
| Example 21 | 31.4 | 12.9 | 38.7 | 7.5 | 5.6 | 0.3 | 0.5 | 0.8 | 1.8 | 0.5 | 7.4 | 32.5 | 7.9 | 43.0 | 11.5 | 2.2 | 0.3 | 0.3 | 0.6 | 1.4 | 1.3 | 2.0 | – |
| Example 22 | 33.1 | 11.0 | 41.9 | 7.7 | 0.6 | 0.3 | 0.5 | 1.1 | 3.4 | 0.4 | 4.1 | 33.0 | 6.4 | 44.6 | 11.5 | 0.2 | 0.3 | 0.3 | 0.8 | 2.6 | 1.4 | 6.6 | – |
| Example 23 | 31.7 | 12.3 | 40.3 | 7.7 | 0.7 | 0.3 | 0.5 | 0.9 | 5.1 | 0.4 | 5.8 | 31.9 | 7.3 | 43.5 | 11.5 | 0.3 | 0.3 | 0.3 | 0.7 | 3.8 | 1.4 | 4.8 | – |
| Example 24 | 30.5 | 12.4 | 39.9 | 7.9 | 2.8 | 0.3 | 0.5 | 1.0 | 4.3 | 0.4 | 7.1 | 31.0 | 7.5 | 43.4 | 12.0 | 1.1 | 0.3 | 0.3 | 0.8 | 3.3 | 1.4 | 2.0 | 857 |
| Example 25 | 29.3 | 14.9 | 39.3 | 7.7 | 2.9 | 0.3 | 0.5 | 1.0 | 3.5 | 0.4 | 6.4 | 30.2 | 9.1 | 43.4 | 11.8 | 1.1 | 0.3 | 0.3 | 0.8 | 2.7 | 1.4 | 2.8 | – |
| Example 26 | 29.7 | 16.2 | 37.0 | 6.4 | 2.6 | 0.3 | 0.5 | 0.9 | 6.1 | 0.4 | 8.6 | 31.1 | 10.0 | 41.5 | 10.0 | 1.0 | 0.3 | 0.3 | 0.7 | 4.8 | 1.3 | 2.2 | – |
| Example 27 | 38.2 | 13.9 | 30.9 | 6.4 | 2.5 | 0.3 | 0.5 | 1.0 | 5.9 | 0.3 | 8.5 | 39.8 | 8.5 | 34.4 | 10.0 | 1.0 | 0.3 | 0.4 | 0.8 | 4.6 | 0.9 | 3.8 | – |
| Example 28 | 38.6 | 15.1 | 30.0 | 6.1 | 2.9 | 0.3 | 0.5 | 0.7 | 5.3 | 0.4 | 8.2 | 40.5 | 9.4 | 33.7 | 9.5 | 1.2 | 0.3 | 0.4 | 0.6 | 4.2 | 0.9 | 4.5 | – |
| Example 29 | 33.0 | 13.8 | 37.4 | 7.1 | 4.9 | 0.3 | 0.6 | 0.9 | 1.5 | 0.4 | 6.5 | 34.2 | 8.4 | 41.6 | 10.9 | 1.9 | 0.3 | 0.4 | 0.7 | 1.2 | 1.2 | 9.9 | – |
| Example 30 | 33.5 | 14.0 | 37.1 | 7.1 | 1.2 | 0.3 | 0.6 | 0.9 | 4.9 | 0.4 | 6.1 | 34.3 | 8.4 | 40.7 | 10.7 | 0.5 | 0.3 | 0.4 | 0.7 | 3.8 | 1.2 | 9.2 | – |

10

[Table 2]

[Table 2]

| | Composition (% by mass) | | | | | | | | | | | Composition (mol%) | | | | | | | | | Molar basicity | Physical properties | |
|---|---|---|---|---|---|---|---|---|---|---|---|---|---|---|---|---|---|---|---|---|---|---|---|
| | $SiO_2$ | $Al_2O_3$ | $CaO$ | $MgO$ | $Fe_2O_3$ | $Na_2O$ | $K_2O$ | $TiO_2$ | $SO_3$ | Others | $Fe_2O_3$ $+SO_3$ | $SiO_2$ | $Al_2O_3$ | $CaO$ | $MgO$ | $Fe_2O_3$ | $Na_2O$ | $K_2O$ | $TiO_2$ | $SO_3$ | | Shrink-age rate (%) | Crystalli-zation temper-ature (°C) |
| Example 31 | 34.2 | 14.2 | 37.9 | 7.0 | 1.3 | 0.3 | 0.6 | 0.7 | 3.5 | 0.3 | 4.8 | 34.8 | 8.5 | 41.3 | 10.7 | 0.5 | 0.3 | 0.4 | 0.6 | 2.7 | 1.2 | 9.8 | – |
| Example 32 | 35.4 | 15.1 | 39.0 | 5.9 | 1.3 | 0.3 | 0.6 | 0.9 | 1.2 | 0.4 | 2.5 | 36.2 | 9.1 | 42.7 | 9.0 | 0.5 | 0.3 | 0.4 | 0.7 | 0.9 | 1.1 | 12.5 | – |
| Example 33 | 33.5 | 9.9 | 41.4 | 8.1 | 0.1 | 0.2 | 0.5 | 1.1 | 4.7 | 0.4 | 4.8 | 33.1 | 5.8 | 43.9 | 12.0 | 0.0 | 0.2 | 0.3 | 0.8 | 3.5 | 1.4 | 2.3 | – |
| Example 34 | 35.8 | 11.4 | 39.9 | 6.9 | 0.8 | 0.3 | 0.6 | 1.1 | 2.7 | 0.5 | 3.6 | 35.9 | 6.7 | 42.8 | 10.3 | 0.3 | 0.3 | 0.4 | 0.8 | 2.1 | 1.2 | 10.9 | – |
| Example 35 | 29.5 | 13.9 | 39.8 | 7.6 | 1.6 | 0.3 | 0.5 | 1.0 | 5.4 | 0.4 | 7.1 | 30.1 | 8.4 | 43.5 | 11.6 | 0.6 | 0.3 | 0.3 | 0.8 | 4.2 | 1.4 | 3.4 | – |
| Example 36 | 40.7 | 14.9 | 33.7 | 5.7 | 1.1 | 0.2 | 0.6 | 0.9 | 1.7 | 0.4 | 2.8 | 41.8 | 9.0 | 37.0 | 8.7 | 0.4 | 0.2 | 0.4 | 0.7 | 1.3 | 0.9 | 13.6 | – |
| Example 37 | 34.4 | 9.9 | 42.5 | 7.4 | 0.1 | 0.3 | 0.6 | 0.8 | 3.7 | 0.4 | 3.7 | 34.0 | 5.7 | 45.0 | 10.9 | 0.0 | 0.3 | 0.4 | 0.6 | 2.7 | 1.4 | 4.3 | – |
| Example 38 | 35.7 | 11.6 | 39.5 | 7.1 | 0.5 | 0.3 | 0.6 | 1.1 | 3.2 | 0.4 | 3.7 | 35.8 | 6.9 | 42.4 | 10.5 | 0.2 | 0.3 | 0.4 | 0.8 | 2.4 | 1.2 | 11.2 | – |
| Example 39 | 29.5 | 13.2 | 41.3 | 7.7 | 1.3 | 0.2 | 0.5 | 0.8 | 5.1 | 0.3 | 6.4 | 29.9 | 7.9 | 44.8 | 11.7 | 0.5 | 0.2 | 0.3 | 0.6 | 3.9 | 1.5 | 3.0 | – |
| Example 40 | 28.3 | 15.3 | 41.4 | 8.1 | 4.4 | 0.2 | 0.5 | 0.9 | 0.5 | 0.4 | 4.8 | 29.1 | 9.3 | 45.6 | 12.4 | 1.7 | 0.2 | 0.3 | 0.7 | 0.4 | 1.5 | 9.2 | – |
| Example 41 | 32.3 | 12.7 | 42.7 | 7.5 | 0.7 | 0.3 | 0.6 | 1.0 | 1.8 | 0.4 | 2.5 | 32.2 | 7.4 | 45.7 | 11.2 | 0.3 | 0.3 | 0.4 | 0.7 | 1.3 | 1.4 | 11.2 | – |
| Example 42 | 36.6 | 13.4 | 36.0 | 6.8 | 1.4 | 0.2 | 0.6 | 0.9 | 3.8 | 0.4 | 5.1 | 37.3 | 8.1 | 39.3 | 10.4 | 0.5 | 0.2 | 0.4 | 0.7 | 2.9 | 1.1 | 10.0 | – |
| Example 43 | 36.6 | 12.6 | 37.2 | 7.2 | 1.8 | 0.3 | 0.6 | 0.9 | 2.4 | 0.3 | 4.2 | 37.1 | 7.5 | 40.3 | 10.9 | 0.7 | 0.3 | 0.4 | 0.7 | 1.8 | 1.1 | 11.5 | – |
| Example 44 | 36.0 | 13.3 | 37.2 | 7.1 | 2.7 | 0.3 | 0.6 | 0.8 | 1.7 | 0.4 | 4.4 | 36.7 | 8.0 | 40.6 | 10.8 | 1.0 | 0.3 | 0.4 | 0.6 | 1.3 | 1.1 | 10.7 | – |
| Example 45 | 33.4 | 9.4 | 42.5 | 7.4 | 4.1 | 0.4 | 0.5 | 0.9 | 1.0 | 0.4 | 5.1 | 33.5 | 5.6 | 45.8 | 11.1 | 1.5 | 0.3 | 0.3 | 0.7 | 0.8 | 1.5 | 8.8 | – |
| Example 46 | 36.8 | 7.7 | 42.4 | 8.0 | 1.3 | 0.2 | 0.3 | 0.7 | 2.3 | 0.4 | 3.6 | 36.0 | 4.5 | 44.6 | 11.6 | 0.5 | 0.2 | 0.2 | 0.5 | 1.7 | 1.4 | 8.5 | – |
| Example 47 | 29.3 | 15.6 | 43.7 | 6.7 | 0.9 | 0.0 | 0.3 | 0.9 | 2.3 | 0.4 | 3.2 | 29.8 | 9.3 | 47.5 | 10.1 | 0.4 | 0.0 | 0.2 | 0.7 | 1.8 | 1.5 | 4.8 | – |
| Example 48 | 30.6 | 14.6 | 42.1 | 7.5 | 1.0 | 0.2 | 0.3 | 1.0 | 2.4 | 0.3 | 3.4 | 30.9 | 8.7 | 45.6 | 11.3 | 0.4 | 0.2 | 0.2 | 0.7 | 1.8 | 1.4 | 9.3 | – |
| Example 49 | 32.0 | 13.2 | 41.9 | 7.7 | 1.3 | 0.0 | 0.3 | 0.9 | 2.2 | 0.6 | 3.6 | 32.2 | 7.8 | 45.2 | 11.5 | 0.5 | 0.0 | 0.2 | 0.7 | 1.7 | 1.4 | 9.5 | 890 |
| Example 50 | 30.3 | 14.5 | 46.4 | 4.3 | 0.6 | 0.0 | 0.2 | 0.8 | 2.4 | 0.3 | 3.0 | 30.9 | 8.7 | 50.7 | 6.6 | 0.2 | 0.0 | 0.2 | 0.6 | 1.8 | 1.4 | 8.0 | – |
| Example 51 | 29.0 | 14.6 | 46.2 | 4.6 | 2.0 | 0.1 | 0.3 | 0.8 | 1.9 | 0.4 | 3.9 | 29.8 | 8.9 | 50.8 | 7.1 | 0.8 | 0.1 | 0.2 | 0.6 | 1.5 | 1.5 | 3.2 | – |
| Example 52 | 29.9 | 14.9 | 46.3 | 4.6 | 0.9 | 0.0 | 0.2 | 0.9 | 2.0 | 0.4 | 2.9 | 30.5 | 9.0 | 50.6 | 7.0 | 0.4 | 0.0 | 0.1 | 0.7 | 1.5 | 1.5 | 3.7 | – |
| Example 53 | 27.3 | 19.4 | 41.4 | 7.7 | 0.4 | 0.0 | 0.2 | 0.8 | 2.4 | 0.3 | 2.8 | 28.0 | 11.7 | 45.5 | 11.7 | 0.2 | 0.0 | 0.1 | 0.6 | 1.9 | 1.4 | 7.1 | – |
| Example 54 | 30.5 | 14.4 | 46.0 | 4.0 | 1.7 | 0.0 | 0.2 | 0.9 | 2.0 | 0.3 | 3.7 | 31.3 | 8.7 | 50.6 | 6.1 | 0.7 | 0.0 | 0.2 | 0.7 | 1.5 | 1.4 | 5.6 | – |
| Example 55 | 25.9 | 20.6 | 39.7 | 6.6 | 4.1 | 0.2 | 0.2 | 0.9 | 1.6 | 0.3 | 5.7 | 27.4 | 12.8 | 45.1 | 10.4 | 1.6 | 0.2 | 0.2 | 0.7 | 1.3 | 1.4 | 6.4 | – |
| Example 56 | 35.3 | 17.3 | 36.0 | 6.0 | 1.2 | 0.2 | 0.3 | 0.8 | 2.4 | 0.4 | 3.7 | 36.5 | 10.6 | 39.9 | 9.3 | 0.5 | 0.2 | 0.2 | 0.7 | 1.9 | 1.0 | 11.2 | – |
| Example 57 | 33.0 | 18.4 | 39.2 | 3.4 | 2.5 | 0.0 | 0.3 | 0.8 | 2.0 | 0.4 | 4.5 | 34.9 | 11.5 | 44.5 | 5.4 | 1.0 | 0.0 | 0.2 | 0.7 | 1.6 | 1.1 | 11.8 | – |
| Example 58 | 35.9 | 15.9 | 39.4 | 3.1 | 1.9 | 0.2 | 0.3 | 0.8 | 2.0 | 0.3 | 3.9 | 37.5 | 9.8 | 44.1 | 4.8 | 0.7 | 0.2 | 0.2 | 0.7 | 1.6 | 1.0 | 11.6 | – |
| Example 59 | 35.3 | 16.6 | 39.1 | 3.3 | 1.8 | 0.2 | 0.3 | 0.9 | 2.1 | 0.3 | 3.9 | 37.0 | 10.3 | 43.9 | 5.1 | 0.7 | 0.2 | 0.2 | 0.7 | 1.6 | 1.0 | 11.3 | – |
| Example 60 | 32.9 | 17.0 | 40.9 | 3.5 | 1.7 | 0.2 | 0.3 | 1.0 | 2.2 | 0.4 | 3.9 | 34.4 | 10.5 | 45.8 | 5.5 | 0.7 | 0.2 | 0.2 | 0.8 | 1.7 | 1.1 | 10.9 | – |
| Example 61 | 32.7 | 17.2 | 41.2 | 3.3 | 1.9 | 0.2 | 0.3 | 0.7 | 2.2 | 0.3 | 4.1 | 34.3 | 10.7 | 46.2 | 5.1 | 0.7 | 0.2 | 0.2 | 0.5 | 1.7 | 1.1 | 11.6 | – |
| Example 62 | 31.7 | 16.4 | 40.8 | 5.9 | 1.2 | 0.0 | 0.3 | 1.0 | 2.3 | 0.3 | 3.5 | 32.6 | 10.0 | 45.0 | 9.0 | 0.5 | 0.0 | 0.2 | 0.8 | 1.8 | 1.3 | 10.6 | 22 |

[Table 3]

[Table 3]

| | Composition (% by mass) | | | | | | | | | | | | Composition (mol%) | | | | | | | | | | Molar basicity | Physical properties | |
| | SiO$_2$ | Al$_2$O$_3$ | CaO | MgO | Fe$_2$O$_3$ | Na$_2$O | K$_2$O | TiO$_2$ | SO$_3$ | MnO | Others | Fe$_2$O$_3$ +MnO +SO$_3$ | SiO$_2$ | Al$_2$O$_3$ | CaO | MgO | Fe$_2$O$_3$ | Na$_2$O | K$_2$O | TiO$_2$ | SO$_3$ | MnO | | Shrink-age rate (%) | Crystal-lization tempera-ture (°C) |
|---|---|---|---|---|---|---|---|---|---|---|---|---|---|---|---|---|---|---|---|---|---|---|---|---|---|
| Example 63 | 29.6 | 14.1 | 38.4 | 7.9 | 1.9 | 0.2 | 0.3 | 0.5 | 1.8 | 5.3 | 0.0 | 9.0 | 30.2 | 8.4 | 41.9 | 12.0 | 0.7 | 0.2 | 0.2 | 0.4 | 1.3 | 4.6 | 1.4 | 0.9 | – |
| Example 64 | 31.9 | 13.0 | 41.2 | 8.2 | 0.3 | 0.0 | 0.3 | 1.0 | 2.0 | 2.1 | 0.0 | 4.5 | 31.8 | 7.6 | 44.0 | 12.1 | 0.1 | 0.0 | 0.2 | 0.7 | 1.5 | 1.8 | 1.4 | 7.0 | – |
| Example 65 | 30.5 | 13.9 | 39.2 | 7.9 | 1.9 | 0.2 | 0.3 | 0.8 | 2.1 | 3.3 | 0.1 | 7.3 | 31.0 | 8.3 | 42.6 | 11.9 | 0.7 | 0.2 | 0.2 | 0.6 | 1.6 | 2.8 | 1.4 | 1.9 | – |
| Example 66 | 30.2 | 16.1 | 36.5 | 6.6 | 1.4 | 0.2 | 0.4 | 0.8 | 2.3 | 5.4 | 0.0 | 9.1 | 31.3 | 9.9 | 40.5 | 10.1 | 0.5 | 0.2 | 0.3 | 0.6 | 1.8 | 4.8 | 1.2 | 4.0 | – |
| Example 67 | 31.3 | 15.7 | 37.4 | 6.9 | 1.9 | 0.0 | 0.3 | 1.0 | 2.2 | 3.2 | 0.0 | 7.3 | 32.2 | 9.6 | 41.3 | 10.7 | 0.7 | 0.0 | 0.2 | 0.8 | 1.7 | 2.8 | 1.2 | 7.8 | – |
| Comparative Example 1 | 42.4 | 12.2 | 35.0 | 6.5 | 1.2 | 0.3 | 0.6 | 0.7 | 0.8 | – | 0.3 | 1.9 | 42.7 | 7.3 | 37.8 | 9.7 | 0.4 | 0.3 | 0.4 | 0.5 | 0.6 | – | 0.9 | Melted | – |
| Example 68 | 34.3 | 15.5 | 26.9 | 8.2 | 11.3 | 1.6 | 1.0 | 0.7 | 0.3 | – | 0.3 | 11.6 | 37.4 | 10.0 | 31.4 | 13.3 | 4.6 | 1.6 | 0.7 | 0.6 | 0.2 | – | 0.9 | 1.6 | – |
| Example 69 | 36.9 | 16.2 | 21.1 | 8.9 | 13.8 | 1.7 | 0.9 | 0.1 | 0.1 | – | 0.3 | 13.9 | 41.0 | 10.6 | 25.1 | 14.7 | 5.8 | 1.8 | 0.6 | 0.1 | 0.1 | – | 0.8 | 1.8 | – |
| Example 70 | 36.9 | 11.7 | 32.3 | 5.3 | 9.8 | 1.1 | 0.8 | 0.7 | 0.2 | 1.1 | 0.2 | 11.1 | 39.7 | 7.4 | 37.2 | 8.4 | 4.0 | 1.1 | 0.6 | 0.5 | 0.2 | 1.0 | 1.0 | 3.2 | – |
| Example 71 | 35.6 | 13.5 | 33.8 | 5.6 | 6.7 | 1.4 | 0.8 | 0.9 | 0.3 | 1.4 | 0.0 | 8.4 | 37.7 | 8.4 | 38.2 | 8.8 | 2.6 | 1.4 | 0.5 | 0.7 | 0.2 | 1.3 | 1.0 | 4.9 | – |
| Example 72 | 31.6 | 14.1 | 36.5 | 6.9 | 7.1 | 0.3 | 0.5 | 1.2 | 1.4 | – | 0.3 | 8.6 | 33.3 | 8.8 | 41.3 | 10.8 | 2.8 | 0.3 | 0.4 | 0.9 | 1.1 | – | 1.2 | 5.3 | – |
| Example 73 | 29.6 | 13.4 | 38.8 | 7.4 | 0.7 | 0.0 | 0.3 | 0.6 | 2.5 | 6.6 | 0.1 | 9.8 | 30.0 | 8.0 | 42.2 | 11.3 | 0.3 | 0.0 | 0.2 | 0.5 | 1.9 | 5.7 | 1.4 | 1.3 | – |
| Example 74 | 30.3 | 16.5 | 36.8 | 6.1 | 0.8 | 0.2 | 0.3 | 1.0 | 1.5 | 6.4 | 0.0 | 8.6 | 31.4 | 10.1 | 40.9 | 9.4 | 0.3 | 0.2 | 0.2 | 0.8 | 1.1 | 5.6 | 1.2 | 3.3 | – |
| Comparative Example 2 | 40.0 | 13.0 | 38.1 | 6.2 | 1.2 | 0.2 | 0.3 | 1.0 | 0.0 | – | 0.0 | 1.2 | 40.3 | 7.7 | 41.1 | 9.2 | 0.5 | 0.1 | 0.2 | 0.8 | 0.0 | – | 1.0 | Melted | – |
| Comparative Example 3 | 31.1 | 23.0 | 36.9 | 6.4 | 1.2 | 0.2 | 0.3 | 0.9 | 0.0 | – | 0.0 | 1.2 | 32.6 | 14.2 | 41.5 | 10.0 | 0.5 | 0.2 | 0.2 | 0.7 | 0.0 | – | 1.1 | Melted | – |

[Table 4]

Composition (% by mass)

| | SiO$_2$ | Al$_2$O$_3$ | CaO | MgO | Fe$_2$O$_3$ | Na$_2$O | K$_2$O | TiO$_2$ | SO$_3$ | Others | CuO | NiO | CoO | ZrO$_2$ | V$_2$O$_5$ | Nb$_2$O$_5$ | MoO$_2$ | WO$_2$ | Y$_2$O$_3$ | Transition metal oxide +SO3 |
|---|---|---|---|---|---|---|---|---|---|---|---|---|---|---|---|---|---|---|---|---|
| Example 75 | 30.4 | 13.4 | 39.1 | 7.8 | 1.7 | 0.0 | 0.3 | 0.7 | 2.8 | 0.3 | 3.5 | - | - | - | - | - | - | - | - | 8.0 |
| Example 76 | 32.4 | 15.0 | 41.2 | 7.5 | 0.5 | 0.1 | 0.3 | 0.8 | 1.2 | 0.0 | - | 1.0 | - | - | - | - | - | - | - | 2.7 |
| Example 77 | 30.2 | 17.2 | 39.6 | 10.8 | 0.1 | 0.2 | 0.3 | 0.9 | 0.3 | 0.1 | - | - | 0.4 | - | - | - | - | - | - | 0.8 |
| Example 78 | 32.5 | 16.4 | 36.4 | 5.8 | 2.0 | 0.2 | 0.2 | 0.8 | 1.4 | 0.4 | - | - | - | 4.0 | - | - | - | - | - | 7.3 |
| Example 79 | 31.0 | 14.7 | 38.8 | 5.7 | 2.0 | 0.2 | 0.3 | 0.9 | 2.0 | 0.3 | - | - | - | - | 4.1 | - | - | - | - | 8.1 |
| Example 80 | 44.1 | 10.0 | 18.8 | 17.3 | 1.8 | 0.0 | 0.3 | 0.9 | 1.7 | 0.0 | - | - | - | - | - | 5.1 | - | - | - | 8.6 |
| Example 81 | 31.8 | 13.9 | 38.0 | 6.9 | 2.0 | 0.2 | 0.3 | 0.8 | 1.7 | 0.3 | - | - | - | - | - | - | 4.1 | - | - | 7.8 |
| Example 82 | 32.1 | 13.5 | 38.9 | 7.3 | 2.0 | 0.2 | 0.3 | 0.7 | 1.7 | 0.4 | - | - | - | - | - | - | - | 2.8 | - | 6.5 |
| Example 83 | 45.2 | 13.6 | 19.0 | 12.5 | 2.0 | 0.1 | 0.3 | 0.6 | 1.8 | 0.3 | - | - | - | - | - | - | - | - | 4.5 | 8.3 |

Composition (mol%)

| | SiO$_2$ | Al$_2$O$_3$ | CaO | MgO | Fe$_2$O$_3$ | Na$_2$O | K$_2$O | TiO$_2$ | SO$_3$ | CuO | NiO | CoO | ZrO$_2$ | V$_2$O$_5$ | Nb$_2$O$_5$ | MoO$_2$ | WO$_2$ | Y$_2$O$_3$ | Physical properties Molar basicity | Physical properties Shrinkage rate (%) |
|---|---|---|---|---|---|---|---|---|---|---|---|---|---|---|---|---|---|---|---|---|
| Example 75 | 31.0 | 8.0 | 42.8 | 11.9 | 0.6 | 0.0 | 0.2 | 0.6 | 2.1 | 2.7 | - | - | - | - | - | - | - | - | 1.4 | 3.1 |
| Example 76 | 32.6 | 8.9 | 44.5 | 11.2 | 0.2 | 0.1 | 0.2 | 0.6 | 0.9 | - | 0.8 | - | - | - | - | - | - | - | 1.3 | 11.9 |
| Example 77 | 30.1 | 10.1 | 42.2 | 16.0 | 0.0 | 0.2 | 0.2 | 0.7 | 0.2 | - | - | 0.3 | - | - | - | - | - | - | 1.4 | 11.9 |
| Example 78 | 34.4 | 10.2 | 41.3 | 9.1 | 0.8 | 0.2 | 0.2 | 0.7 | 1.1 | - | - | - | 2.0 | - | - | - | - | - | 1.1 | 9.2 |
| Example 79 | 32.8 | 9.2 | 44.1 | 8.9 | 0.8 | 0.2 | 0.2 | 0.7 | 1.6 | - | - | - | - | 1.4 | - | - | - | - | 1.3 | 9.4 |
| Example 80 | 44.2 | 5.9 | 20.1 | 25.8 | 0.7 | 0.0 | 0.2 | 0.7 | 1.3 | - | - | - | - | - | 1.2 | - | - | - | 0.9 | 7.5 |
| Example 81 | 33.2 | 8.5 | 42.4 | 10.7 | 0.8 | 0.2 | 0.2 | 0.7 | 1.4 | - | - | - | - | - | - | 2.0 | - | - | 1.3 | 6.6 |
| Example 82 | 33.2 | 8.3 | 43.2 | 11.3 | 0.8 | 0.2 | 0.2 | 0.6 | 1.3 | - | - | - | - | - | - | - | 0.8 | - | 1.3 | 9.0 |
| Example 83 | 47.0 | 8.3 | 21.1 | 19.3 | 0.8 | 0.2 | 0.2 | 0.5 | 1.4 | - | - | - | - | - | - | - | - | 1.2 | 0.7 | 9.4 |

FIG. 1 is a graph obtained by plotting the molar basicity P of each sample in the horizontal axis, and the total content Q of a transition metal compound ($Fe_2O_3$/MnO) and sulfur in the vertical axis. An upper drawing in FIG. 1 is a graph obtained by extracting samples in which the heating shrinkage rate at 1110°C is 14% or less among respective samples. In addition, a lower drawing in FIG. 1 is a graph obtained by extracting samples melted at 1110°C.

As indicated by a broken line in FIG. 1, in samples having excellent heat resistance (the shrinkage rate at 1110°C is 14% or less), the total content Q of the transition metal compound and sulfur was 0.5% by mass or greater, and P and Q satisfied the following Expression (1).

$$-3.3 \times P + 5.1 \leq Q \quad (1)$$

An upper drawing in FIG. 2 is a graph obtained by extracting samples in which the heating shrinkage rate at 1110°C is 12% or less among respective samples. In addition, a lower drawing in FIG. 2 is a graph obtained by extracting samples in which the heating shrinkage rate at 1110°C is greater than 12%.

As indicated by a broken line in FIG. 2, in samples having more excellent heat resistance (the heating shrinkage rate at 1110°C is 12% or less), the total content Q of the transition metal compound and sulfur was 0.5% by mass or greater, and P and Q satisfied the following Expression (2).

$$-7.5 \times P + 11.0 \leq Q \quad (2)$$

An upper drawing in FIG. 3 is a graph obtained by extracting samples in which the heating shrinkage rate at 1110°C is 10% or less among respective samples. In addition, a lower drawing in FIG. 3 is a graph obtained by extracting samples in which the heating shrinkage rate at 1110°C is greater than 10%.

As indicated by a broken line in FIG. 3, in samples having still more excellent heat resistance (the heating shrinkage rate at 1110°C is 10% or less), the total content Q of the transition metal compound and sulfur was 2.5% by mass or greater, and P and Q satisfied the following Expression (3).

$$-6.7 \times P + 11.9 \leq Q \quad (3)$$

FIG. 4 is a graph obtained by plotting the total content Q of the transition metal compound and sulfur of each sample (molar basicity P = 1.4) in Test 1 in the horizontal axis, and the crystallization peak temperature in the vertical axis. As illustrated in FIG. 4, it could be seen that the higher the total content Q of the transition metal compound and sulfur ($SO_3$) is, the further the crystallization peak temperature is lowered, and the further crystallization is promoted.

FIG. 5 is a graph obtained by plotting the molar basicity P of each sample (the total content Q of the transition metal compound and sulfur is 4.2% by mass) in Test 1 in the horizontal axis, and the crystallization peak temperature in the vertical axis. As illustrated in FIG. 5, it could be seen that the higher the molar basicity P is, the further the crystallization peak temperature is lowered, and the further crystallization is promoted.

FIG. 6 is a graph obtained by plotting the crystallization peak temperature of each sample in Test 1 in the horizontal axis, and the heating shrinkage rate at 1110°C in the vertical axis. As illustrated in FIG. 6, it could be seen that the lower the crystallization peak temperature is, the lower the heating shrinkage rate is and the further the heat resistance is improved.

<Test 2: Measurement of Melt Viscosity>

Samples in which the molar basicity P is 0.4, 0.6, 1.6, and 1.8 were prepared, and melt viscosity was measured. Measurement was performed by using a typical ball pull-up type viscometer. Specifically, a platinum ball connected to a platinum wire was submerged in the melt maintained at a constant temperature, and viscosity was obtained from a load when pulling up the platinum ball at a predetermined speed.

(Results of Test 2)

Results of Test 2 are shown in the following Table 5. In samples in which the molar basicity P was 0.4 and 1.8, respectively, at a point of time at which a temperature lowered from 1500°C by 25°C to 50°C, viscosity rose to a certain extent at which measurement was difficult. In contrast, in samples in which the molar basicity P was 0.6 and 1.6, respectively, there was a temperature range of approximately 100°C to 200°C until measurement of viscosity became difficult.

[Table 5]

| Temperature (°C) | Molar basicity (P) | | | |
|---|---|---|---|---|
| | 0.4 | 0.6 | 1.6 | 1.8 |
| 1500 | 121 | 38 | 9 | 24 |
| 1475 | 452 | | | Measurement was difficult |
| 1450 | Measurement was difficult | | 10 | |
| 1425 | | | 16 | |
| 1400 | | 151 | Measurement was difficult | |
| 1350 | | 446 | | |
| 1300 | | 1649 | | |
| 1275 | | Measurement was difficult | | |
| *Unit of viscosity is Poise | | | | |

Viscosity when a raw material was melted is an index that greatly affects manufacturability of the inorganic fiber. When manufacturing the inorganic fiber, a raw material is melted in a cupola or an electric furnace, and a melt maintained at approximately 1500°C is allowed to flow out from the bottom of the furnace, and is fiberized by a spinning method or a blowing method. The melt is stretched in a fiberization process, but the melt is cooled down in the process. That is, for satisfactory fiberization, it is preferable that an increase in viscosity in accordance with a decrease in a temperature of the melt is gradual. Accordingly, from the results in Test 2, it could be seen that the molar basicity P is preferably within a range of 0.6 to 1.6 ($0.6 \leq P \leq 1.6$) in order to satisfactorily fiberize the inorganic fiber.

<Summary of Test 1>

From the results, it was newly found that the molar basicity P and the total content Q of the transition metal compound and sulfur ($SO_3$) affect heat resistance of rock wool, respectively. Specifically, in rock wool and a composition for manufacturing rock wool, when the molar basicity P and the total content Q of the transition metal compound and sulfur ($SO_3$) are within the above-described predetermined ranges, microcrystals exist before being softened and deformed due to heating, softening does not proceed and curvature and fusion of the fiber do not occur even when being exposed to a high temperature of 1100°C or higher.

<Test 2: Preparation of Inorganic Fiber>

Hereinafter, with regard to the composition for manufacturing an inorganic fiber based on the specific examples, an inorganic fiber was actually manufactured, and heat resistance was measured. The relationship illustrated in FIG. 1 to FIG. 3 was verified by actually preparing an inorganic fiber. Note that, the invention is not limited thereto.

<Preparation of Fiber>

In compositions shown in Table 6, natural stones such as basalt, and various raw materials such as slag and silica are poured into an electric furnace or cupola, and the raw materials were melted by a similar method as in a method of manufacturing a typical fiber. Then, the melted raw materials were allowed to flow out from the bottom of the furnace and were fiberized by a spinning method. A binder adhered to the fiber, and an inorganic fiber molded body (volume density: 0.08 to 0.12 $g/cm^3$) was obtained by allowing the fiber to pass through a curing furnace.

<Evaluation for Heat Resistance>

As an evaluation for the heat resistance, a heating shrinkage rate of the fiber molded body was measured.

Specifically, a molded body sample cut to 50 mm × 50 mm was placed in an electric furnace, and the sample was heated up to 1110°C in accordance with a temperature rising rate simulating a heating curve of ISO834. Lengths of the sample in a vertical direction and a horizontal direction were measured before and after heating, and the shrinkage rate was measured by the dimensional change. Specifically, calculation was performed with an expression of a heating shrinkage rate (%) = (sample length before heating - sample length after heating)/sample length before heating × 100. Note that, a shrinkage rate shown in Table 6 is an average value of a shrinkage rate in the vertical direction and a shrinkage rate in the horizontal direction.

Results of the test are shown in Table 6 and FIG. 7.

[Table 6]

| | Composition (% by mass) | | | | | | | | | | | | Composition (mol%) | | | | | | | | | | | Physical properties |
|---|---|---|---|---|---|---|---|---|---|---|---|---|---|---|---|---|---|---|---|---|---|---|---|---|
| | $SiO_2$ | $Al_2O_3$ | CaO | MgO | $Fe_2O_3$ | $Na_2O$ | $K_2O$ | $TiO_2$ | $SO_3$ | MnO | Others | $Fe_2O_3$ +MnO +$SO_3$ | $SiO_2$ | $Al_2O_3$ | CaO | MgO | $Fe_2O_3$ | $Na_2O$ | $K_2O$ | $TiO_2$ | $SO_3$ | MnO | Molar basicity | Shrinkage rate (%) |
| Example 84 | 36.7 | 16.0 | 23.4 | 5.8 | 13.6 | 1.6 | 1.3 | 1.0 | 0.1 | 0.2 | 0.3 | 13.9 | 41.5 | 10.7 | 28.4 | 9.9 | 5.8 | 1.7 | 0.9 | 0.8 | 0.1 | 0.2 | 0.7 | 2.5 |
| Example 85 | 36.1 | 15.0 | 25.1 | 8.1 | 11.7 | 1.8 | 0.9 | 0.7 | 0.2 | 0.2 | 0.3 | 12.1 | 39.4 | 9.7 | 29.4 | 13.2 | 4.8 | 1.9 | 0.6 | 0.6 | 0.2 | 0.2 | 0.9 | 3.1 |
| Example 86 | 35.4 | 11.5 | 32.5 | 5.4 | 9.6 | 1.3 | 0.9 | 0.7 | 0.3 | 1.5 | 0.9 | 11.4 | 38.3 | 7.3 | 37.7 | 8.6 | 3.9 | 1.4 | 0.6 | 0.6 | 0.2 | 1.4 | 1.0 | 3.4 |
| Example 87 | 35.3 | 10.9 | 34.8 | 5.3 | 8.5 | 1.1 | 0.9 | 0.7 | 0.3 | 1.3 | 0.9 | 10.1 | 37.7 | 6.8 | 39.9 | 8.4 | 3.4 | 1.2 | 0.6 | 0.6 | 0.3 | 1.2 | 1.1 | 3.5 |
| Example 88 | 36.6 | 15.1 | 26.2 | 8.4 | 9.7 | 1.9 | 0.9 | 0.6 | 0.3 | 0.2 | 0.2 | 10.2 | 39.4 | 9.6 | 30.2 | 13.4 | 3.9 | 1.9 | 0.6 | 0.5 | 0.2 | 0.2 | 0.9 | 5.1 |
| Example 89 | 31.9 | 12.6 | 45.6 | 5.8 | 1.2 | 0.3 | 0.3 | 0.7 | 0.9 | 0.5 | 0.3 | 2.5 | 32.1 | 7.5 | 49.2 | 8.7 | 0.5 | 0.3 | 0.2 | 0.6 | 0.6 | 0.4 | 1.5 | 6.6 |
| Comparative Example 4 | 45.6 | 10.0 | 35.0 | 2.3 | 1.9 | 1.7 | 2.2 | 0.6 | 0.3 | 0.1 | 0.3 | 2.3 | 47.1 | 6.1 | 38.7 | 3.5 | 0.7 | 1.7 | 1.4 | 0.5 | 0.2 | 0.1 | 0.8 | Melted |
| Comparative Example 5 | 40.7 | 14.5 | 35.3 | 4.3 | 1.2 | 1.1 | 1.0 | 0.9 | 0.7 | 0.2 | 0.2 | 2.0 | 42.0 | 8.8 | 39.0 | 6.5 | 0.5 | 1.1 | 0.7 | 0.7 | 0.5 | 0.2 | 0.9 | Melted |
| Comparative Example 6 | 41.3 | 11.1 | 39.1 | 5.3 | 0.1 | 0.3 | 0.3 | 0.8 | 1.4 | 0.1 | 0.2 | 1.6 | 41.3 | 6.5 | 41.9 | 7.9 | 0.0 | 0.3 | 0.2 | 0.6 | 1.0 | 0.1 | 1.0 | Melted |

FIG. 7 is a graph obtained by plotting the molar basicity P of each sample in the horizontal axis, and the total content Q of a transition metal compound ($Fe_2O_3$/MnO) and sulfur in the vertical axis.

In addition, two broken lines in FIG. 7 indicate the following relational Expressions illustrated in FIG. 1 to FIG. 3.

$$-3.3 \times P + 5.1 \leq Q \quad (1)$$

$$-6.7 \times P + 11.9 \leq Q \quad (3)$$

As illustrated in FIG. 7, it could be confirmed that results obtained by evaluating the fiber molded body show a tendency matching the results of the composition for manufacturing an inorganic fiber as illustrated in FIG. 1 to FIG. 3. That is, it could be confirmed that a relationship between the heat resistance and the composition is also established in not only the composition for manufacturing an inorganic fiber but also the inorganic fiber, and thus it is considered that probability is extremely high.

**Claims**

1.  An inorganic fiber,

    wherein a total amount Q of a transition metal compound and $SO_3$ is 0.5% by mass or greater,
    a molar basicity P expressed by a molar ratio (mol% (CaO + MgO)/mol% ($SiO_2$ + $Al_2O_3$)) of the sum of CaO and MgO to the sum of $SiO_2$ and $Al_2O_3$ is 0.6 or greater, and
    Expression (1): $-3.3 \times P + 5.1 \leq Q$ (1) is satisfied.

2.  The inorganic fiber according to claim 1,
    wherein the transition metal compound is at least one kind of compound selected from the group consisting of Fe, Mn, Cu, Ni, Co, Zr, V, Nb, Mo, W, and Y.

3.  The inorganic fiber according to claim 1 or 2,
    wherein a heating shrinkage rate at 1110°C is 14% or less.

4.  The inorganic fiber according to any one of claims 1 to 3, the inorganic fiber having a composition containing:

    25% by weight to 45% by weight of $SiO_2$;
    5% by weight to 25% by weight of $Al_2O_3$;
    15% by weight to 50% by weight of CaO;
    3% by weight to 20% by weight of MgO;
    0.1% by weight to 14% by weight of transition metal compound; and
    0.1% by weight to 10% by weight of $SO_3$.

5.  The inorganic fiber according to claim 4, further containing:

    0% by weight to 10% by weight of $Na_2O$; and
    0% by weight to 10% by weight of $K_2O$.

6.  The inorganic fiber according to claim 5,

    wherein the inorganic fiber contains at least one or more kinds selected from the group consisting of $P_2O_5$, $Li_2O$, $Na_2O$, and $K_2O$, and
    a total amount of $P_2O_5$, $Li_2O$, $Na_2O$, and $K_2O$ is 3% by weight to 10% by weight.

7.  The inorganic fiber according to any one of claims 1 to 6,
    the inorganic fiber is at least one or more kinds selected from the group consisting of rock wool, stone wool, slag wool, mineral wool, glass wool, and mineral glass wool.

8.  An inorganic fiber product, comprising:
    the inorganic fiber according to any one of claims 1 to 7.

9. The inorganic fiber product according to claim 8,
   wherein the inorganic fiber product is a heat insulating material or a refractory material.

10. A method of manufacturing an inorganic fiber product, comprising:
    molding the inorganic fiber according to any one of claims 1 to 7.

11. A composition for manufacturing an inorganic fiber,

    wherein a total amount Q of a transition metal compound and $SO_3$ is 0.5% by mass or greater,
    a molar basicity P expressed by a molar ratio (mol% (CaO + MgO)/mol% ($SiO_2$ + $Al_2O_3$)) of the sum of CaO
    and MgO to the sum of $SiO_2$ and $Al_2O_3$ is 0.6 or greater, and
    Expression (1): $-3.3 \times P + 5.1 \leq Q$ (1) is satisfied.

12. A method of manufacturing an inorganic fiber, comprising:

    melting the composition for manufacturing an inorganic fiber according to claim 11; and
    making the resultant melt into a fiber to obtain an inorganic fiber.

# FIG. 1

# FIG. 2

# FIG. 3

# FIG. 4

# FIG. 5

# FIG. 6

# FIG. 7

## INTERNATIONAL SEARCH REPORT

| International application No. |
|---|
| PCT/JP2020/028459 |

A. CLASSIFICATION OF SUBJECT MATTER
Int. Cl. C03C3/062(2006.01)i, C03C3/087(2006.01)i, C03C13/06(2006.01)i,
D01F9/08(2006.01)i
FI: C03C13/06, C03C3/062, C03C3/087, D01F9/08 A
According to International Patent Classification (IPC) or to both national classification and IPC

B. FIELDS SEARCHED

Minimum documentation searched (classification system followed by classification symbols)
Int. Cl. C03C1/00-14/00, D01F9/08-9/32

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)
INTERGLAD

C. DOCUMENTS CONSIDERED TO BE RELEVANT

| Category* | Citation of document, with indication, where appropriate, of the relevant passages | Relevant to claim No. |
|---|---|---|
| X | WO 2012/176799 A1 (NICHIAS CORP.) 27 December | 1-12 |
| Y | 2012, paragraph [0022], examples | 4 |
| | | |
| X | JP 2016-515995 A (KCC COPORSTION) 02 June 2016, | 1-12 |
| Y | claim 7, paragraph [0028], examples | 4 |
| | | |
| X | JP 2002-512817 A (SAINT GOBAIN ISOVER) 08 May | 1-12 |
| Y | 2002, claim 16, examples | 4 |
| | | |
| X | JP 51-87517 A (NIPPON ASBESTOS CO., LTD.,) 31 July | 1-3, 5-12 |
| Y | 1976, page 2, lower left column, examples | 4 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.09.2020 | 24.09.2020 |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**INTERNATIONAL SEARCH REPORT**
Information on patent family members

| International application No. |
| --- |
| PCT/JP2020/028459 |

| Patent Documents referred to in the Report | Publication Date | Patent Family | Publication Date |
| --- | --- | --- | --- |
| WO 2012/176799 A1 | 27.12.2012 | (Family: none) | |
| JP 2016-515995 A | 02.06.2016 | WO 2014/171562 A1 | |
| JP 2002-512817 A | 08.05.2002 | WO 1999/056526 A1<br>EP 994648 A1<br>CN 1273505 A | |
| JP 51-87517 A | 31.07.1976 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H645472 B
- JP H665617 B

- WO 2012176799 A